# EUROPÄISCHE PATENTSCHRIFT

(11) **EP 4 726 973 B1**
(45) Veröffentlichungstag und Bekanntmachung des Hinweises auf die Patenterteilung: **16.09.2026**
(21) Anmeldenummer: 25207048.7
(22) Anmeldetag: 06.10.2025
(51) Int. Cl.: H02K 1/2781, H02K 21/16

(54) **MOTOR FÜR EIN LENKSYSTEM EINES KRAFTFAHRZEUGS UND LENKSYSTEM FÜR EIN KRAFTFAHRZEUG**
MOTOR FOR A STEERING SYSTEM OF A MOTOR VEHICLE AND STEERING SYSTEM FOR A MOTOR VEHICLE
MOTEUR POUR UN SYSTÈME DE DIRECTION D'UN VÉHICULE AUTOMOBILE ET SYSTÈME DE DIRECTION POUR UN VÉHICULE AUTOMOBILE

(30) Priorität: 11.10.2024 BE 202405676
(43) Veröffentlichungstag der Anmeldung: 15.04.2026
(73) Patentinhaber: thyssenkrupp Presta AG, 9492 Eschen (LI); thyssenkrupp AG, 45143 Essen (DE)
(72) Erfinder: Valovics, Tamas, 6800 Feldkirch (AT); Bratina, Blaz, 9492 Eschen (LI)
(74) Vertreter: thyssenkrupp Intellectual Property GmbH

(56) Entgegenhaltungen:
- EP-B1- 2 107 666
- DE-A1- 102014 222 064

## Beschreibung

### Stand der Technik

Die Erfindung betrifft einen elektrischen Motor für ein Lenksystem eines Kraftfahrzeugs, der einen Stator und einen darin um eine Rotorachse drehbar gelagerten Rotor aufweist, wobei der Stator einen Statoraußendurchmesser und einen Statorinnendurchmesser aufweist und radial nach innen vorstehende Statorzähne umfasst,
die den Statorinnendurchmesser begrenzen, und
deren Anzahl einer Statorzahnanzahl entspricht, und
die jeweils eine Statorzahnbreite aufweisen, und die außen über ein Statorjoch mit einer radialen Statorjochdicke miteinander verbunden sind, zwischen denen jeweils ein Statorspalt mit einer Statorspaltbreite ausgebildet ist, und die mindestens eine Statorwicklung tragen, wobei der Rotor einen Rotordurchmesser und über den Außenumfang jeweils in einem Polwinkel zueinander versetzt angeordnete Magnete aufweist, deren Anzahl einer Polanzahl entspricht, und die sich parallel zur Rotorachse erstrecken, und die jeweils in radialer Richtung eine Magnetdicke und in Umfangsrichtung eine Magnetbreite aufweisen, die sich relativ zur Rotorachse über einen Magnetwinkel erstreckt, und die Magnete koaxial zur Rotorachse mit einem Magnetaußenradius zylindrisch gewölbt ausgebildet sind, wobei zwischen den Statorzähnen und den Magneten ein Luftspalt mit einer radialen Luftspaltbreite ausgebildet ist, Ein Lenksystem für ein Kraftfahrzeug mit einem derartigen Motor ist ebenfalls Gegenstand der Erfindung.

Es ist bekannt, im Lenksystem eines Kraftfahrzeugs ein Antriebsmoment durch einen elektrischen Motor bereitzustellen. Beispielsweise kann ein Motor zur Erzeugung eines Hilfsmoments in einer EPAS-Lenkung (Electric Power Assisted Steering) zur Unterstützung einer manuellen Lenkeingabe eingesetzt werden, oder in einem Steer-by-Wire-Lenksystem in einem Feedback-Aktuator zur Erzeugung eines Feedback-Moments oder in einem Lenkaktuator zur Erzeugung eines mechanischen Lenkeinschlags lenkbarer Räder.

Im Stand der Technik ist eine Vielzahl von Ausführungen von Motoren für elektrische Antriebe bekannt, die zumeist als Universalmotoren mit allgemeinen Einsatzmöglichkeiten in unterschiedlichen Anwendungen ausgestaltet sind. Insbesondere in Lenksystemen von Kraftfahrzeugsystemen werden spezifische, besonders hohe Anforderungen an die eingesetzten motorischen Antriebe gestellt. Beispielsweise wird eine immer höhere Leistungsdichte und Effizienz bei möglichst kompakten Abmessungen und geringem Gewicht gefordert, und höchste Zuverlässigkeit und Sicherheit unter widrigen Betriebs- und Umgebungsbedingungen über die gesamte Lebensdauer des Kraftfahrzeugs.

Die genannten Anforderungen können mit Universalmotoren meist nur eingeschränkt erfüllt werden. Es wird daher im Stand der Technik beschrieben, Motoren für spezifische Anwendung in Lenksystemen bereitzustellen, beispielsweise in der US20090195104A1, US8598762B2, DE102014222064A1, EP2107666B1 oder US09013083B2.

Die bekannten Motoren sind zwar bereits besser für den Einsatz in Lenksystemen angepasst. Es werden jedoch jeweils nur spezielle Eigenschaften angesprochen, so dass eine Optimierung für eine konkrete Anwendung im Lenksystem nach wie vor aufwendig ist.

Angesichts der vorangehend erläuterten Problematik ist es eine Aufgabe der vorliegenden Erfindung, verbesserte Einsatzmöglichkeiten und eine einfachere Anpassung zu ermöglichen.

### Darstellung der Erfindung

Diese Aufgabe wird erfindungsgemäß gelöst durch den Motor mit den Merkmalen des Anspruchs 1 und ein Lenksystem für ein Kraftfahrzeug gemäß Anspruch 11. Vorteilhafte Weiterbildungen ergeben sich aus den Unteransprüchen.

Bei einem elektrischen Motor für ein Lenksystem eines Kraftfahrzeugs,
der einen Stator und einen darin um eine Rotorachse drehbar gelagerten Rotor aufweist, wobei der Stator einen Statoraußendurchmesser und einen Statorinnendurchmesser aufweist und radial nach innen vorstehende Statorzähne umfasst, die den Statorinnendurchmesser begrenzen, und
deren Anzahl einer Statorzahnanzahl entspricht, und
die jeweils eine Statorzahnbreite aufweisen, und
die außen über ein Statorjoch mit einer radialen Statorjochdicke miteinander verbunden sind, zwischen denen jeweils ein Statorspalt mit einer Statorspaltbreite ausgebildet ist, und die mindestens eine Statorwicklung tragen,
wobei der Rotor einen Rotordurchmesser und über den Außenumfang jeweils in einem Polwinkel zueinander versetzt angeordnete Magnete aufweist,
deren Anzahl einer Polanzahl entspricht, und
die sich parallel zur Rotorachse erstrecken, und
die jeweils in radialer Richtung eine Magnetdicke und in Umfangsrichtung eine Magnetbreite aufweisen, die sich relativ zur Rotorachse über einen Magnetwinkel erstreckt, und die Magnete koaxial zur Rotorachse mit einem Magnetaußenradius zylindrisch gewölbt ausgebildet sind,
wobei zwischen den Statorzähnen und den Magneten ein Luftspalt mit einer radialen Luftspaltbreite ausgebildet ist,
ist erfindungsgemäß vorgesehen,
   dass
   - die Statorzahnanzahl 12 (zwölf) oder ein Vielfaches von 12 beträgt,
   - die Polzahl 8 (acht) oder ein Vielfaches von 8 beträgt,
   - das Verhältnis der Magnetdicke zur Magnetbreite zwischen 0,2 und 0,3 beträgt,
   - das Verhältnis der Statorspaltbreite zur Statorzahnbreite zwischen 0,3 und 0,4 beträgt,
   - das Verhältnis des Statorinnendurchmessers zum Statoraußendurchmesser zwischen 0,45 und 0,55 beträgt,
   - das Verhältnis des Statorinnendurchmessers zur Luftspaltbreite zwischen 45 und 55 beträgt,
   - das Verhältnis des Magnetwinkels zum Polwinkel zwischen 0,85 und 0,95 beträgt,
   - das Verhältnis des Magnetaußenradius zum Rotordurchmesser zwischen 0,2 und 0,3 beträgt,
   - das Verhältnis der Statorjochdicke zur Statorzahnbreite zwischen 0,65 und 0,75 beträgt.

Die Statorzahnbreite wird in einem radialen Anschnitt zwischen dem Statorinnendurchmesser und dem Statoraußendurchmessers in Umfangsrichtung gemessen. Der Statorspalt liegt radial im inneren Bereich, benachbart zum Statorinnendurchmesser. Dort ist der Statorzahn relativ zur Statorzahnbreite in Umfangsrichtung verbreitert. Die Spaltanzahl der Statorspalte entspricht der Statorzahnanzahl. Die Statorzahnanzahl weicht von der Polzahl ab, welche die Anzahl der über den Umfang des Rototrs verteilt angeordneten, als Permanantmagnete ausgebildeten Magnete angibt. Die Luftspaltbreite entspricht der halben Differenz zwischen dem Statorinnendurchmesser und dem Rotordurchmesser, welcher dem Umkreis um die konvex nach außen gewölbten Magnete entspricht.

Die Statorspaltbreite kann gleichbedeutend auch als Schlitzöffnung bezeichnet werden. Der Magnetwinkel wird im Stand der Technik gleichbedeutend auch als Neigungswinkel bezeichnet.

Die Magnete sind als Permanentmagnete ausgebildet, beispielsweise aus Seltenerd- oder Ferrit-Material. Die Magnetisierung kann radial oder axial bezüglich der Rotorachse ausgerichtet sein.

Der Rotorgrundkörper kann als Blechstapel aus einer Vielzahl von in axialer Richtung gestapelten Magnetblechen ausgebildet sein, oder einen solchen umfassen.

Gemäß der Erfindung werden für den Rotor und den Stator eine Mehrzahl von Rotorparametern und Statorparametern definiert. Konkret umfassen die Rotorparameter:
- die Statorzahnanzahl,
- das Verhältnis Magnetdicke MT / Magnetbreite MW,
- das Verhältnis Magnetwinkel BetaM / Polwinkel BetaP,
- das Verhältnis Magnetaußenradius RMO / Rotordurchmesser D3 / ROD
und die Statorparameter:
- die Polzahl,
- das Verhältnis Statorspaltbreite SO / Statorzahnbreite TW,
- das Verhältnis Magnetbreite MW / Statorinnendurchmesser D2,
- das Verhältnis Statorinnendurchmesser D2 / Luftspaltbreite AG
- das Verhältnis Statorjochdicke YT / Statorzahnbreite TW.

Durch deren Zusammenwirken wird eine grundlegende Basis-Optimierung für die Anwendung in einem Lenksystem bereitgestellt. Im Gegensatz zum Stand der Technik, durch den jeweils lediglich spezifische Teilprobleme adressiert werden, deren gleichzeitige Optimierung zu Zielkonflikten führen kann, wird erfindungsgemäß erstmals eine ganzheitliche Lösung zur Verfügung gestellt. Die individuelle Anpassung an ein spezifisches Lenksystem kann durch Variation der Rotor- und Statorparameter innerhalb der erfindungsgemäß definierten Bereiche optimiert werden, ohne dass hinderliche Zielkonflikte bezüglich spezifischer Anforderungen auftreten.

Eine vorteilhafte Ausführung kann dadurch realisiert sein, dass das Verhältnis der Magnetdicke zur Magnetbreite 0,25 beträgt. Die Magnete erstrecken sich mit ihrer Magnetbreite in Umfangsrichtung, und die Magnetdicke entspricht der radialen Abmessung. Dadurch wird eine im Wesentlichen quaderförmige Grundform gebildet, wobei die Außenseite zylindrisch nach außen gewölbt ist.

Es ist vorteilhaft, dass das Verhältnis der Statorspaltbreite zur Statorzahnbreite 0,34 beträgt. Die Statorspaltbreite wird am Statorinnendurchmesser in Umfangsrichtung jeweils zwischen benachbarten Statorzähnen gemessen.

Es ist weiterhin vorteilhaft, dass das Verhältnis des Statorinnendurchmessers zum Statoraußendurchmesser 0,50 beträgt. Der Statorinnendurchmesser bezeichnet den zylindrischen axialen Durchgang, der durch die radial nach innen vorstehenden Statorzähne begrenzt wird. Der Statoraußendurchmesser wird über das über den gesamten Kreisumfang umlaufende, im wesentlichen hohlzylindrische Statorjoch gemessen, welches die Statorzähne mechanisch und magnetisch miteinander verbindet.

Es ist weiterhin vorteilhaft,, dass das Verhältnis des Statorinnendurchmessers zur Luftspaltbreite 51 beträgt. Der Luftspalt bezeichnet den im Querschnitt kreisringförmig zwischen dem Rotor und dem Stator umlaufenden Spaltraum.

Es ist weiterhin vorteilhaft,, dass das Verhältnis des Magnetwinkels (BetaM) zum Polwinkel (BetaP) 0,89 beträgt. Der Polwinkel BetaP ergibt sich aus dem Gesamtwinkel von 360° geteilt durch die Polzahl, bei acht Polen entsprechend BetaP= 45°. Der Magnetwinkel BetaM bezeichnet den Winkelabschnitt bezogen auf die Rotorachse, der von einem Magnet eingenommen wird. Dass der Magnetwinkel immer kleiner ist als der Polwinkel BetaP bedeutet, dass die Magnete in Umfangsrichtung jeweils voneinander beabstandet sind, entsprechend der Winkeldifferenz.

Es ist weiterhin vorteilhaft, dass das Verhältnis des Magnetaußenradius zum Rotordurchmesser 0,26 beträgt. Die Magnete sind gattungsgemäß auf ihrer radialen Außenseite zylindrisch ausgebildet. Der Zylinderradius gibt den Magnetaußenradius an. Der Rotordurchmesser wird als Durchmesser des Umkreises um die radial am weitesten nach außen vorstehenden Scheitelpunkte der zylindrischen Außenseiten gemessen.

Es ist weiterhin vorteilhaft, dass das Verhältnis der Statorjochdicke zur Statorzahnbreite 0,68 beträgt. Dadurch ist der Querschnitt des Statorjochs, welches die Statorzähne entlang dem Außenumfang miteinander verbindet, kleiner als der Querschnitt eines Statorzahns.

Es ist weiterhin vorteilhaft,, dass die Statorwicklung aus einem Statordraht mit einer Statordrahtdicke ausgebildet ist, die in einem definierten Verhältnis zu einem der oben genannten Statorparameter (D1, D2, TW, YT, SO) steht.

Es ist vorteilhaft, dass eine elektrische Steuereinheit integriert ist. Die elektrische Steuereinheit (Electrical Control Unit = ECU) kann bevorzugt zusammen mit dem Motor eine integrierte Antriebseinheit ausbilden. Sie umfasst an die Statorwicklungen angeschlossene elektrische Versorgungs- und Steuerschaltungen, die ihrerseits mit der elektrischen Lenkungssteuerung zusammenwirken, beispielsweise Interface-Schaltungen, Sicherheitseinrichtungen, Leistungsendstufen und dergleichen. Die integrierte Kombination des Motors mit der Steuereinheit wird auch als Power-Pack bezeichnet. Durch die erfindungsgemäße Ausgestaltung des Motors und die an die jeweilige Anwendung angepasste Ausgestaltung der Steuereinheit kann dieses besonders kompakt, und hinsichtlich der geforderten elektrischen und mechanischen Charakteristik optimal abgestimmt werden.

Die ECU kann in ein Motorgehäuse des Motor integriert sein, welches den Stator aufnimmt, oder in einem Steuergehäuse, welches mit dem Motorgehäuse verbunden ist. Dadurch kann in jedem Fall ein Power-Pack mit kompakten Abmessungen bereitgestellt werden.

Nachfolgend ist ein vorteilhaftes Ausführungsbeispiel angegeben, bei dem die Stator- und Rotorparameter innerhalb der erfindungsgemäßen Bereiche realisiert sind.

| | Ausführungsbeispiel | Anspruch 1 |
|---|---|---|
| Statorspaltbreite SO | 2,45 mm | |
| Statorzahnbreite SW | 7,3 mm | |
| Statorinnendurchmesser D2 | 43 mm | |
| Statoraußendurchmesser D1 | 86 mm | |
| Statorzahnanzahl NS | 12 | 12*n |
| Polzahl NP | 8 | 8*n |
| Magnetbreite MW | 13,45 mm | |
| Magnetdicke MT | 3,4 mm | |
| Verhältnis Magnetdicke MT / Magnetbreite MW | 0,25 | 0,20-0,30 |
| Luftspaltbreite AG | 0,85 mm | |
| Rotordurchmesser D3 = D2 - 2*AG = ROD | 41,3 mm | |
| Verhältnis Statorspaltbreite SO / Statorzahnbreite TW | 0,34 | 0,30 - 0,40 |
| Verhältnis Statorinnendurchmesser D2 / Statoraußendurchmesser D1 | 0,5 | 0,45 - 0,55 |
| Verhältnis Magnetbreite MW / Statorinnendurchmesser D2 | 0,31 | |
| Verhältnis Statorinnendurchmesser D2 / Luftspaltbreite AG | 50,59 | 45 - 55 |
| Magnetwinkel BetaM | 40,25° | |
| Magnetwinkel BetaM / Polwinkel BetaP | 0,89 | 0,85 - 0,95 |
| Magnetaußenradius RMO | 10,8 mm | |
| Verhältnis Magnetaußenradius RMO / Rotordurchmesser D3 / ROD | 0,26 | 0,2 - 0,3 |
| Verhältnis Statorjochdicke YT / Statorzahnbreite TW | 0,68 | 0,65 - 0,75 |

Die Erfindung umfasst weiterhin ein Lenksystem für ein Kraftfahrzeug, umfassend mindestens einen elektrischen Motor, dadurch gekennzeichnet, dass der Motor ausgebildet ist nach einem der vorangehend beschriebenen Ausführungen oder Kombinationen davon. Der Motor kann in einem Hilfskraftantrieb eingesetzt sein, oder in einem Feedback-Aktuator, und/oder einem Lenkaktuator.

Es ist vorteilhaft, dass der Rotor Befestigungselemente aufweist, die an einem Rotorgrundköper zwischen den Magneten angebracht sind und die Magnete halten. Die Befestigungselemente radial nach außen abstehen. Der Rotorgrundkörper kann in an sich bekannter Weise als axialer Blechstapel aus Magnetblech ausgebildet sein. Die Befestigungselemente können vorzugsweise von dem Rotorgrundkörper in dem Zwischenraum zwischen zwei in Umfangsrichtung benachbarten Magneten angeordnet sein. Entsprechend wird die in Umfangsrichtung gemessene Breite der Befestigungselemente durch das erfindungsgemäße Verhältnis zwischen dem Polwinkel und dem relativ dazu kleineren Magnetwinkel bestimmt. Die Befestigungselemente können gleichzeitig als Abstandshalter zwischen den Magneten in Umfangsrichtung und zur Fixierung der Magnete dienen. Ein Magnet ist jeweils zwischen in Umfangsrichtung beabstandeten Befestigungselementen positioniert und fixiert. Die Fixierung kann formschlüssig, kraftschlüssig und/oder stoffschlüssig erfolgen.

Es ist bevorzugt, dass die Befestigungselemente eine axiale Länge aufweisen, die kleiner ist als eine axiale Magnetlänge der Magnete. Dadurch, dass die Befestigungselemente in Richtung der Rotorachse gemessen kürzer sind als die Magnete, wobei die Magnetlänge ein Vielfaches der Länge der Befestigungselemente beträgt, ergibt sich eine vorteilhafte geringere Beeinflussung des Magnetfelds gegenüber bekannten Ausführungen, bei denen sich die Befestigungselemente über die gesamte Magnetlänge oder einen überwiegenden Teil der Magnetlänge erstrecken.

Bei der vorgenannten Ausführung kann vorgesehen sein, dass mindestens zwei Befestigungselemente in axialer Richtung beabstandet angeordnet sind.

### Beschreibung der Zeichnungen

Vorteilhafte Ausführungsformen der Erfindung werden im Folgenden anhand der Zeichnungen näher erläutert. Im Einzelnen zeigen:
- Fig. 1: ein Lenksystem eines Kraftfahrzeugs in einer schematischen perspektivischen Ansicht,
- Fig. 2: eine perspektivische Ansicht eines erfindungsgemäßen Motors,
- Fig. 3: einen schematischen Querschnitt durch den Motor gemäß Fig. 2,
- Fig. 4: eine perspektivische Ansicht eines erfindungsgemäßen Rotors.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

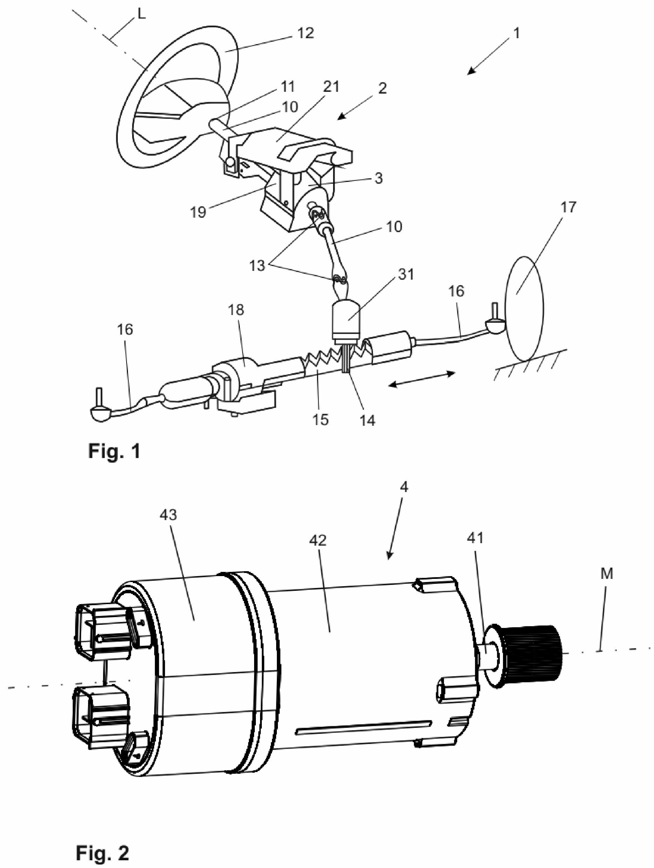

In Fig. 1 ist ein als elektromechanische Hilfskraftlenkung 1 ausgebildetes Lenksystem für ein Kraftfahrzeug schematisch dargestellt. Diese weist eine Lenksäule 2 mit einer Trageinheit 21 auf, die an einer nicht dargestellten Karosserie eines Kraftfahrzeugs anbringbar ist.

In der Lenksäule 2 ist eine Lenkspindel 10 um ihre Längsachse L drehbar gelagert. Diese weist an ihrem bezüglich der Fahrtrichtung hinteren Ende einen Befestigungsabschnitt 11 auf, an dem ein Lenkrad 12 drehfest angebracht ist, über welches ein Fahrer ein Lenkmoment (Handmoment) als Lenkbefehl in die Lenkspindel 10 einbringen kann.

Das Lenkmoment wird über die Lenkspindel 10, die zur Anpassung an die Einbaulage im Kraftfahrzeug zwischengeschaltete Kreuzgelenke 13 aufweist, auf ein Lenkritzel 14 übertragen, welches in eine längsverschieblich gelagerte Zahnstange 15 eingreift. Diese setzt eine Drehung der Lenkspindel 10 bei einem Lenkeingriff in eine Verschiebung von Spurstangen 16 um, wie mit dem Doppelpfeil angedeutet, welche den vorgegebenen Lenkeingriff als Lenkeinschlag auf die lenkbaren Räder 17 des Kraftfahrzeugs übertragen.

Eine elektrische Hilfskraftunterstützung kann einen an der Lenksäule 2 angebrachten, mit der Lenkspindel 10 gekoppelten Hilfskraftantrieb 3, oder einen am Ritzel 14 mit der Lenkspindel 10 gekoppelten Hilfskraftantrieb 31 aufweisen, wobei die Hilfskraftantriebe 3 und 31 gleichartig aufgebaut sein können. Durch den Hilfskraftantrieb 3 oder 31 kann ein Hilfsdrehmoment in die Lenkwelle 1 und/oder das Lenkritzel 14 eingekoppelt werden, um den Fahrer bei der Lenkarbeit zu unterstützten.

Es kann auch ein Hilfskraftantrieb 18 vorgesehen sein, um eine die Lenkung unterstützende Hilfskraft in die Zahnstange 15 einzubringen.

Üblicherweise ist nur an einer der gezeigten drei Positionen ein Hilfskraftantrieb 3, 31 oder 18 angebracht. Das Hilfsdrehmoment bzw. die Hilfskraft, welche zur Unterstützung des Fahrers mittels des jeweiligen Hilfskraftantriebs 3, 31 oder 18 aufgebracht werden soll, wird unter Berücksichtigung eines von einem Drehmomentsensor 19 ermittelten, vom Fahrer manuell eingebrachten Lenkmoments bestimmt. Alternativ oder in Kombination mit der Einbringung des Hilfsdrehmoments kann durch die Hilfskraftantriebe 3, 31, 18 ein zusätzlicher Lenkwinkel in das Lenksystem eingebracht werden, der zu dem vom Fahrer über das Lenkrad 12 aufgebrachten Lenkwinkel summiert wird.

Mittels des Drehmomentsensors 19 wird das manuell in die Lenkspindel 10 eingebrachte Handmoment erfasst, beispielsweise in an sich bekannter Weise durch Messung der Torsion eines in die Lenkspindel 10 eingegliederten Drehstabs. Über eine nicht dargestellte elektrische Steuereinheit wird ein Hilfsmoment bestimmt und ein daraus abgeleitetes elektrisches Steuersignal in einen elektrischen Motor 4 des Hilfskraftantriebs 3, 31 oder 18 eingespeist. Das auf diese Weise erzeugte elektromotorische Moment wird zur Unterstützung der manuellen Lenkarbeit über ein Getriebe 5 des elektrischen Hilfskraftantriebs 3 in die Lenkspindel 10 eingekoppelt.

Ein erfindungsgemäß ausgebildeter elektrischer Motor 4, der in einem Hilfskraftantrieb 3, 31 oder 18 eingesetzt sein kann, ist in Fig.2 freigestellt in einer perspektivischen Ansicht gezeigt. Dieser weist ein um die Rotorachse M drehend antreibbare Motorwelle 41 auf, die in einem Motorgehäuse 42 gelagert ist. An diesem kann ein Steuergehäuse 43 angebracht sein, in dem eine hier nicht explizit dargestellte elektrische Steuereinheit untergebracht sein kann, die zur elektrischen Ansteuerung des Motors 4 ausgestaltet ist.

Der erfindungsgemäße Motor 4 ist nicht auf den Einsatz in einem Hilfskraftantrieb 3, 31, oder 18 gemäß Fig.1 beschränkt, sondern kann mit Vorteil auch anderweitig in einem Lenksystem eingesetzt werden, beispielsweise in einem Feedback-Aktuator, bei dem die Motorwelle 41 mit der Lenkspindel 10 gekuppelt ist. Es ist auch denkbar und möglich, dass ein erfindungsgemäßer Motor 4 als Lenkaktuator in einem Steer-by-Wire-Lenksystem eingesetzt wird, beispielsweise analog zum Hilfskraftantrieb 31, oder in einem Einzelrad-Lenkaktuator.

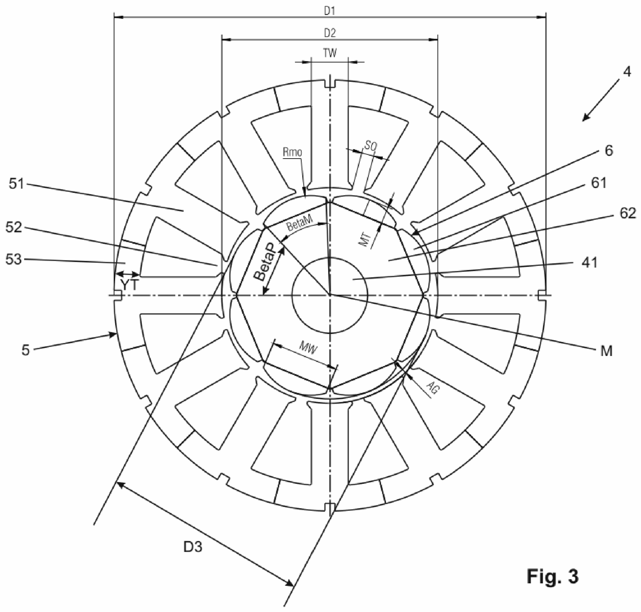

Fig.3 zeigt einen Querschnitt durch den Motor 4 quer zur Rotorachse M. Dieser weist einen Stator 5 und einen darin um eine Rotorachse M drehbar gelagerten Rotor 6 auf,
wobei der Stator 5 einen Statoraußendurchmesser D1 und einen Statorinnendurchmesser D2 aufweist. Der Stator weist gleichmäßig über den Umfang verteilte, radial nach innen vorstehende Statorzähne 51 auf, die den Statorinnendurchmesser D2 begrenzen, und deren Anzahl einer Statorzahnanzahl NS = 12 entspricht. Die Statorzähne 51 weisen eine Statorzahnbreite TW auf, und sind außen über ein Statorjoch 53 mit einer radialen Statorjochdicke YT miteinander verbunden.

Zwischen den Statorzähnen 51ist jeweils ein Statorspalt 52 mit einer Statorspaltbreite SO ausgebildet. Jeder Statorzahn 51 trägt im Bereich seiner Statorzahnbreite TW eine hier nicht dargestellte, im Prinzip bekannte Statorwicklung.

Der Rotor 6 weist einen Rotordurchmesser D3 (=ROD) und über den Außenumfang jeweils in einem Polwinkel BetaP zueinander versetzt angeordnete Magnete 61 aufweist,
deren Anzahl einer Polanzahl NP = 8 entspricht. Die Magnete 61 sind als Permanentmegnete ausgebildet und auf einem Rotorgrundkörper 62 fixiert. Sie erstrecken sich parallel zur Rotorachse M, und weisen jeweils in radialer Richtung eine Magnetdicke MT und in Umfangsrichtung eine Magnetbreite MW aufweisen, die sich relativ zur Rotorachse M über einen Magnetwinkel BetaM erstreckt.

Die Magnete 61 sind koaxial zur Rotorachse M mit einem Magnetaußenradius RMO zylindrisch gewölbt ausgebildet.

Der Magnetaußenradius RMO ist kleiner als der Radius des Rotors 6, der dem halben Rotordurchmesser D3 entspricht.

Zwischen den Statorzähnen 51 und den Magneten 6 ist ein Luftspalt mit einer radialen Luftspaltbreite AG ausgebildet.

Das Verhältnis der Magnetdicke MT zur Magnetbreite MW beträgt zwischen 0,2 und 0,3, bevorzugt 0,25.

Das Verhältnis der Statorspaltbreite SO zur Statorzahnbreite TW beträgt zwischen 0,3 und 0,4, bevorzugt 0,34.

Das Verhältnis des Statorinnendurchmessers D2 zum Statoraußendurchmesser D1 beträgt zwischen 0,45 und 0,55, bevorzugt 0,50.

Das Verhältnis des Statorinnendurchmessers D2 zur Luftspaltbreite AG beträgt zwischen 45 und 55, bevorzugt 50,59.

Das Verhältnis des Magnetwinkels BetaM zum Polwinkel BetaP beträgt zwischen 0,85 und 0,95, bevorzugt 0,89.

Das Verhältnis des Magnetaußenradius RMO zum Rotordurchmesser D3 (ROD) beträgt zwischen 0,2 und 0,3, bevorzugt 0,26.

Das Verhältnis der Statorjochdicke YT zur Statorzahnbreite TW beträgt zwischen 0,65 und 0,75, bevorzugt 0,68.

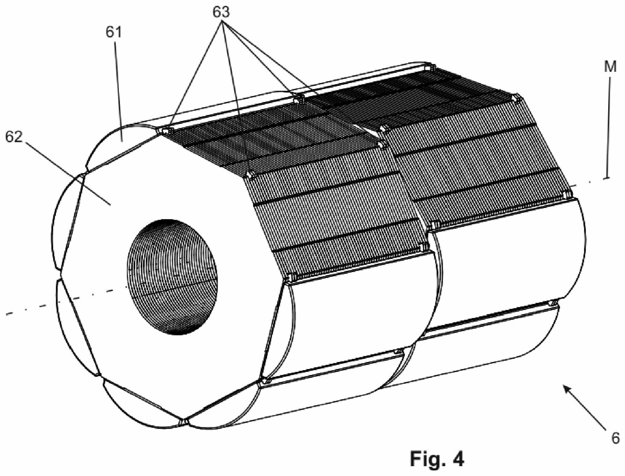

Fig. 4 zeigt eine schematische perspektivische Ansicht eines Rotors 6, der aus einer Vielzahl von in axialer Richtung gestapelten Magnetblechen ausgebildet ist. Jeweils zwischen zwei in Umfangsrichtung benachbarten Magneten 61 sind zwei in axialer Richtung beabstandete Befestigungselemente 63 angeordnet, zwischen denen jeweils ein Magnet 61 formschlüssig, kraftschlüssig und/oder stoffschlüssig gehalten ist. Die zwei Magnete im oberen rechten Viertel sind zur besseren Übersicht in der Darstellung weggelassen. Die Befestigungselemente können aus den Magnetblechen ausgebildet sein und stehen radial nach außen von dem Rotorgrundkörper 62 vor. Axial in Richtung der Rotorachse M gemessen haben sie lediglich einen Bruchteil der Magnetlänge.

### Bezugszeichenliste

- 1: Lenksystem (Hilfskraftlenkung)
- 10: Lenkspindel
- 11: Befestigungsabschnitt
- 12: Lenkrad
- 13: Kreuzgelenk
- 14: Lenkritzel
- 15: Zahnstange
- 16: Spurstange
- 17: Rad
- 18: Hilfskraftantrieb
- 19: Drehmomentsensor
- 2: Lenksäule
- 21: Trageinheit
- 3, 31: Hilfskraftantrieb
- 4: Motor
- 41: Motorwelle
- 42: Motorgehäuse
- 43: Steuergehäuse
- 5: Stator
- 51: Statorzahn
- 52: Statorspalt
- 53: Statorjoch
- 6: Rotor
- 61: Magnet
- 62: Rotorgrundkörper
- 63: Befestigungselemente
- L: Längsachse
- M: Rotorachse
- D1: Statoraußendurchmesser
- D2: Statorinnendurchmesser
- NS: Statorzahnanzahl
- TW: Statorzahnbreite
- YT: Statorjochdicke
- SO: Statorspaltbreite
- D3: Rotordurchmesser (ROD)
- BetaP: Polwinkel
- NP: Polanzahl
- MT: Magnetdicke
- MW: Magnetbreite
- BetaM: Magnetwinkel (BetaM)
- RMO: Magnetaußenradius (RMO)
- AG: Luftspaltbreite (AG)

## Patentansprüche

1. Elektrischer Motor (4) für ein Lenksystem eines Kraftfahrzeugs,
der einen Stator (5) und einen darin um eine Rotorachse (M) drehbar gelagerten Rotor (6) aufweist,
wobei der Stator (5) einen Statoraußendurchmesser (D1) und einen Statorinnendurchmesser (D2) aufweist und radial nach innen vorstehende Statorzähne (51) umfasst,
die den Statorinnendurchmesser (D2) begrenzen, und
deren Anzahl einer Statorzahnanzahl (NS) entspricht, und
die jeweils eine Statorzahnbreite (TW) aufweisen, und
die außen über ein Statorjoch (53) mit einer radialen Statorjochdicke (YT) miteinander verbunden sind,
zwischen denen jeweils ein Statorspalt (52) mit einer Statorspaltbreite (SO) ausgebildet ist, und
die mindestens eine Statorwicklung tragen,
wobei der Rotor (6) einen Rotordurchmesser (D3, ROD) und über den Außenumfang jeweils in einem Polwinkel (BetaP) zueinander versetzt angeordnete Magnete (61) aufweist,
deren Anzahl einer Polanzahl (NP) entspricht, und
die sich parallel zur Rotorachse (M) erstrecken, und
die jeweils in radialer Richtung eine Magnetdicke (MT) und in Umfangsrichtung eine Magnetbreite (MW) aufweisen, die sich relativ zur Rotorachse (M) über einen Magnetwinkel (BetaM) erstreckt, und
die Magnete (61) mit einem Magnetaußenradius (RMO) zylindrisch gewölbt ausgebildet sind,
wobei zwischen den Statorzähnen (51) und den Magneten (61) ein Luftspalt mit einer radialen Luftspaltbreite (AG) ausgebildet ist,
**dadurch gekennzeichnet,**
**dass**
- die Statorzahnanzahl (NS) 12 oder ein Vielfaches von 12 beträgt,
- die Polzahl (NP) 8 oder ein Vielfaches von 8 beträgt,
- das Verhältnis der Magnetdicke (MT) zur Magnetbreite (MW) zwischen 0,2 und 0,3 beträgt,
- das Verhältnis der Statorspaltbreite (SO) zur Statorzahnbreite (TW) zwischen 0,3 und 0,4 beträgt,
- das Verhältnis des Statorinnendurchmessers (D2) zum Statoraußendurchmesser (D1) zwischen 0,45 und 0,55 beträgt,
- das Verhältnis des Statorinnendurchmessers (D2) zur Luftspaltbreite (AG) zwischen 45 und 55 beträgt,
- das Verhältnis des Magnetwinkels (BetaM) zum Polwinkel (BetaP) zwischen 0,85 und 0,95 beträgt,
- das Verhältnis des Magnetaußenradius (RMO) zum Rotordurchmesser (D3 ROD) zwischen 0,2 und 0,3 beträgt,
- das Verhältnis der Statorjochdicke (YT) zur Statorzahnbreite (TW) zwischen 0,65 und 0,75 beträgt.

2. Motor nach Anspruch 1, **dadurch gekennzeichnet, dass** das Verhältnis der Magnetdicke (MT) zur Magnetbreite (MW) 0,25 beträgt.

3. Motor nach einem der vorangehenden Ansprüche, **dadurch gekennzeichnet, dass** das Verhältnis der Statorspaltbreite (SO) zur Statorzahnbreite (TW) 0,34 beträgt.

4. Motor nach einem der vorangehenden Ansprüche, **dadurch gekennzeichnet, dass** das Verhältnis des Statorinnendurchmessers (D2) zum Statoraußendurchmesser (D1) 0,50 beträgt.

5. Motor nach einem der vorangehenden Ansprüche, **dadurch gekennzeichnet, dass** das Verhältnis des Statorinnendurchmessers (D2) zur Luftspaltbreite (AG) 51 beträgt.

6. Motor nach einem der vorangehenden Ansprüche, **dadurch gekennzeichnet, dass** das Verhältnis des Magnetwinkels (BetaM) zum Polwinkel (BetaP) 0,89 beträgt.

7. Motor nach einem der vorangehenden Ansprüche, **dadurch gekennzeichnet, dass** das Verhältnis des Magnetaußenradius (RMO) zum Rotordurchmesser (D3 ROD) 0,26 beträgt.

8. Motor nach einem der vorangehenden Ansprüche, **dadurch gekennzeichnet, dass** das Verhältnis der Statorjochdicke (YT) zur Statorzahnbreite (TW) 0,68 beträgt.

9. Motor nach einem der vorangehenden Ansprüche, **dadurch gekennzeichnet, dass** die Statorwicklung aus einem Statordraht mit einer Statordrahtdicke ausgebildet ist, die in einem definierten Verhältnis zu einem der Statorparameter (D1, D2, TW, YT, SO) steht.

10. Motor nach einem der vorangehenden Ansprüche, **dadurch gekennzeichnet, dass** eine elektrische Steuereinheit integriert ist.

11. Motor nach einem der vorangehenden Ansprüche, **dadurch gekennzeichnet, dass** der Rotor (6) Befestigungselemente (63) aufweist, die an einem Rotorgrundköper (62) zwischen den Magneten (61) angebracht sind und die Magnete (62) halten.

12. Motor nach Anspruch 11, **dadurch gekennzeichnet, dass** die Befestigungselemente (63) radial nach außen abstehen.

13. Motor nach Anspruch 11 oder 12, **dadurch gekennzeichnet, dass** die Befestigungselemente (63) eine axiale Länge aufweisen, die kleiner ist als eine axiale Magnetlänge der Magnete (61).

14. Motor nach Anspruch 13, **dadurch gekennzeichnet, dass** mindestens zwei Befestigungselemente (63) in axialer Richtung beabstandet angeordnet sind.

15. Lenksystem für ein Kraftfahrzeug, umfassend mindestens einen elektrischen Motor (4), **dadurch gekennzeichnet, dass** der Motor (4) ausgebildet ist nach einem der vorangehenden Ansprüche 1 bis 14.

## Claims

1. Electric motor (4) for a steering system of a motor vehicle,
which has a stator (5) and a rotor (6), which is mounted in the latter so as to be rotatable about a rotor axis (M),
the stator (5) having a stator outer diameter (D1) and a stator inner diameter (D2) and comprising stator teeth (51) which project radially inwards
and delimit the stator inner diameter (D2), and
the number of which corresponds to a number of stator teeth (NS), and
which each have a stator tooth width (TW), and
which are connected to each other externally via a stator yoke (53) having a radial stator yoke thickness (YT), and
between each of which a stator gap (52) having a stator gap width (SO) is formed, and which carry at least one stator winding,
the rotor (6) having a rotor diameter (D3, ROD) and magnets (61) which are offset from each other over the outer circumference in each case at a pole angle (BetaP) and
the number of which corresponds to a number of poles (NP), and
which extend parallel to the rotor axis (M), and
which each have a magnet thickness (MT) in the radial direction and a magnet width (MW) in the circumferential direction, the magnet width extending over a magnet angle (BetaM) relative to the rotor axis (M), and
the magnets (61) are cylindrically curved with a magnet outer radius (RMO),
wherein an air gap having a radial air gap width (AG) is formed between the stator teeth (51) and the magnets (61),
**characterized**
**in that**
- the number of stator teeth (NS) is 12 or a multiple of 12,
- the number of poles (NP) is 8 or a multiple of 8,
- the ratio of the magnet thickness (MT) to the magnet width (MW) is between 0.2 and 0.3,
- the ratio of the stator gap width (SO) to the stator tooth width (TW) is between 0.3 and 0.4,
- the ratio of the stator inner diameter (D2) to the stator outer diameter (D1) is between 0.45 and 0.55,
- the ratio of the stator inner diameter (D2) to the air gap width (AG) is between 45 and 55,
- the ratio of the magnet angle (BetaM) to the pole angle (BetaP) is between 0.85 and 0.95,
- the ratio of the magnet outer radius (RMO) to the rotor diameter (D3 ROD) is between 0.2 and 0.3,
- the ratio of the stator yoke thickness (YT) to the stator tooth width (TW) is between 0.65 and 0.75.

2. Motor according to Claim 1, **characterized in that** the ratio of the magnet thickness (MT) to the magnet width (MW) is 0.25.

3. Motor according to either of the preceding claims, **characterized in that** the ratio of the stator gap width (SO) to the stator tooth width (TW) is 0.34.

4. Motor according to any one of the preceding claims, **characterized in that** the ratio of the stator inner diameter (D2) to the stator outer diameter (D1) is 0.50.

5. Motor according to any one of the preceding claims, **characterized in that** the ratio of the stator inner diameter (D2) to the air gap width (AG) is 51.

6. Motor according to any one of the preceding claims, **characterized in that** the ratio of the magnet angle (BetaM) to the pole angle (BetaP) is 0.89.

7. Motor according to any one of the preceding claims, **characterized in that** the ratio of the magnet outer radius (RMO) to the rotor diameter (D3 ROD) is 0.26.

8. Motor according to any one of the preceding claims, **characterized in that** the ratio of the stator yoke thickness (YT) to the stator tooth width (TW) is 0.68.

9. Motor according to any one of the preceding claims, **characterized in that** the stator winding is formed from a stator wire having a stator wire thickness, which is at a defined ratio to one of the stator parameters (D1, D2, TW, YT, SO).

10. Motor according to any one of the preceding claims, **characterized in that** an electrical control unit is incorporated.

11. Motor according to any one of the preceding claims, **characterized in that** the rotor (6) has fastening elements (63), which are attached to a rotor basic body (62) between the magnets (61) and hold the magnets (62).

12. Motor according to Claim 11, **characterized in that** the fastening elements (63) protrude radially outwards.

13. Motor according to Claim 11 or 12, **characterized in that** the fastening elements (63) have an axial length which is smaller than an axial magnet length of the magnets (61).

14. Motor according to Claim 13, **characterized in that** at least two fastening elements (63) are spaced apart in the axial direction.

15. Steering system for a motor vehicle, comprising at least one electric motor (4), **characterized in that** the motor (4) is designed according to any one of the preceding Claims 1 to 14.

## Revendications

1. Moteur électrique (4) pour un système de direction d'un véhicule automobile, comprenant un stator (5) et un rotor (6) monté dans celui-ci de manière rotative autour d'un axe de rotor (M),
le stator (5) présentant un diamètre extérieur du stator (D1) et un diamètre intérieur du stator (D2) et comprenant des dents de stator (51) faisant saillie radialement vers l'intérieur,
qui délimitent le diamètre intérieur du stator (D2), et
dont le nombre correspond à un nombre de dents de stator (NS), et
qui présentent chacune une largeur de dent de stator (TW), et
qui sont reliées entre elles, à l'extérieur, par une culasse de stator (53) présentant une épaisseur radiale de culasse de stator (YT),
entre lesquelles est formée respectivement une encoche de stator (52) présentant une largeur d'encoche de stator (SO), et
qui portent au moins un enroulement de stator,
le rotor (6) présentant un diamètre de rotor (D3, ROD) et des aimants (61) disposés sur la circonférence extérieure de manière décalée les uns par rapport aux autres d'un angle polaire (BetaP),
dont le nombre correspond à un nombre de pôles (NP), et
qui s'étendent parallèlement à l'axe de rotor (M), et
qui présentent chacun, dans la direction radiale, une épaisseur d'aimant (MT) et, dans la direction circonférentielle, une largeur d'aimant (MW), laquelle s'étend, par rapport à l'axe de rotor (M), sur un angle d'aimant (BetaM), et
les aimants (61) étant réalisés avec un bombement cylindrique défini par un rayon extérieur d'aimant (RMO),
un entrefer présentant une largeur radiale d'entrefer (AG) étant formé entre les dents de stator (51) et les aimants (61),
**caractérisé en ce que**
- le nombre de dents de stator (NS) est égal à 12 ou à un multiple de 12,
- le nombre de pôles (NP) est égal à 8 ou à un multiple de 8,
- le rapport entre l'épaisseur d'aimant (MT) et la largeur d'aimant (MW) est compris entre 0,2 et 0,3,
- le rapport entre la largeur d'encoche de stator (SO) et la largeur de dent de stator (TW) est compris entre 0,3 et 0,4,
- le rapport entre le diamètre intérieur du stator (D2) et le diamètre extérieur du stator (D1) est compris entre 0,45 et 0,55,
- le rapport entre le diamètre intérieur du stator (D2) et la largeur radiale d'entrefer (AG) est compris entre 45 et 55,
- le rapport entre l'angle d'aimant (BetaM) et l'angle polaire (BetaP) est compris entre 0,85 et 0,95,
- le rapport entre le rayon extérieur d'aimant (RMO) et le diamètre de rotor (D3 ROD) est compris entre 0,2 et 0,3,
- le rapport entre l'épaisseur de culasse de stator (YT) et la largeur de dent de stator (TW) est compris entre 0,65 et 0,75.

2. Moteur selon la revendication 1, **caractérisé en ce que** le rapport entre l'épaisseur d'aimant (MT) et la largeur d'aimant (MW) est de 0,25.

3. Moteur selon l'une quelconque des revendications précédentes, **caractérisé en ce que** le rapport entre la largeur d'encoche de stator (SO) et la largeur de dent de stator (TW) est de 0,34.

4. Moteur selon l'une quelconque des revendications précédentes, **caractérisé en ce que** le rapport entre le diamètre intérieur du stator (D2) et le diamètre extérieur du stator (D1) est de 0,50.

5. Moteur selon l'une quelconque des revendications précédentes, **caractérisé en ce que** le rapport entre le diamètre intérieur du stator (D2) et la largeur radiale d'entrefer (AG) est de 51.

6. Moteur selon l'une quelconque des revendications précédentes, **caractérisé en ce que** le rapport entre l'angle d'aimant (BetaM) et l'angle polaire (BetaP) est de 0,89.

7. Moteur selon l'une quelconque des revendications précédentes, **caractérisé en ce que** le rapport entre le rayon extérieur d'aimant (RMO) et le diamètre de rotor (D3 ROD) est de 0,26.

8. Moteur selon l'une quelconque des revendications précédentes, **caractérisé en ce que** le rapport entre l'épaisseur de culasse de stator (YT) et la largeur de dent de stator (TW) est de 0,68.

9. Moteur selon l'une quelconque des revendications précédentes, **caractérisé en ce que** l'enroulement de stator est formé à partir d'un fil de stator présentant une épaisseur de fil de stator qui est dans un rapport défini avec l'un des paramètres de stator (D1, D2, TW, YT, SO).

10. Moteur selon l'une quelconque des revendications précédentes, **caractérisé en ce qu'**une unité de commande électrique est intégrée.

11. Moteur selon l'une quelconque des revendications précédentes, **caractérisé en ce que** le rotor (6) comprend des éléments de fixation (63) qui sont montés sur un corps de base de rotor (62) entre les aimants (61) et maintiennent les aimants (62).

12. Moteur selon la revendication 11, **caractérisé en ce que** les éléments de fixation (63) font saillie radialement vers l'extérieur.

13. Moteur selon la revendication 11 ou 12, **caractérisé en ce que** les éléments de fixation (63) présentent une longueur axiale qui est inférieure à une longueur axiale d'aimant des aimants (61).

14. Moteur selon la revendication 13, **caractérisé en ce qu'**au moins deux éléments de fixation (63) sont disposés à distance l'un de l'autre dans la direction axiale.

15. Système de direction pour un véhicule automobile, comprenant au moins un moteur électrique (4), **caractérisé en ce que** le moteur (4) est configuré selon l'une quelconque des revendications précédentes 1 à 14.
